# EUROPEAN PATENT SPECIFICATION

(11) **EP 3 434 037 B1**
(45) Date of publication and mention of the grant of the patent: **07.09.2022**
(21) Application number: 16745265.5
(22) Date of filing: 29.06.2016
(51) Int. Cl.: H04W 36/00, H04W 36/04, H04W 16/14, H04W 88/06

(54) **METHOD AND APPARATUS FOR CHANGING A WIRELESS LOCAL AREA NETWORK TERMINATION**
VERFAHREN UND VORRICHTUN UM EINEN ENDPUNKT EINES DRAHTLOSEN LOKALEN NETZWERKS ZU ÄNDERN
PROCÉDÉ ET DISPOSITIF PERMETTANT LE CHANGEMENT D'UNE TERMINAISON DE RÉSEAU LOCAL SANS FIL

(30) Priority: 23.03.2016 US 201662312335 P
(43) Date of publication of application: 30.01.2019
(73) Proprietor: Intel Corporation, Santa Clara, CA 95054 (US)
(72) Inventor: YIU, Candy, Portland, OR 97201 (US); ISKANDER, Shadi, 82008 Unterhaching (DE); SIROTKIN, Alexander, Hod Hasharon, 4529555 Magdiel (IL); PARRON, Jerome, 90768 Fuerth (DE); EFRAIM-SAGI, Penny, 4450540 Kfar Sava M (IL); HIMAYAT, Nageen, Fremont, CA 94539 (US)
(74) Representative: HGF
(86) International application number: PCT/US2016/040142
(87) International publication number: WO 2017/164903

(56) References cited:
- HUAWEI: "Details of operations for LTE-WLAN aggregation", 3GPP DRAFT; R3-151375_SIGNALLING_FLOW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Beijing, China; 20150824 - 20150828 23 August 2015 (2015-08-23), XP051006551, Retrieved from the Internet: URL:http://www.3gpp.org/ftp/Meetings_3GPP_ SYNC/RAN3/Docs/ [retrieved on 2015-08-23]
- INTEL CORPORATION: "Mobility enhancements for LWA", 3GPP DRAFT; R3-160626-ELWA-MOBILITY-ENHANCEMENTS_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bangalore, India; 20160411 - 20160415 2 April 2016 (2016-04-02), XP051082997, Retrieved from the Internet: URL:http://www.3gpp.org/ftp/tsg_ran/WG3_Iu /TSGR3_91bis/Docs/ [retrieved on 2016-04-02]
- MEDIATEK INC: "LTE/WLAN aggregation mobility aspects", 3GPP DRAFT; R2-153814 LTE WLAN AGGGREGATION MOBILITY ASPECTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, China; 20150824 - 20150828 23 August 2015 (2015-08-23), XP051040242, Retrieved from the Internet: URL:http://www.3gpp.org/ftp/Meetings_3GPP_ SYNC/RAN2/Docs/ [retrieved on 2015-08-23]
- HUAWEI (RAPPORTEUR): "Introduction of NB-IoT", 3GPP DRAFT; R2-162068 - 36 300 RUNNING CR TO CAPTURE AGREEMENTS ON NB-IOT_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. St Julian's, Malta; 20160215 - 20160219 7 March 2016 (2016-03-07), XP051081859, Retrieved from the Internet: URL:http://www.3gpp.org/ftp/tsg_ran/WG2_RL 2/TSGR2_93/Docs/ [retrieved on 2016-03-07]
- INTEL CORPORATION: "Control Signalling Flows for LWA", 3GPP DRAFT; R2-154666-LWA-CONTROL-PLANE-ASPECTS-V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151004 - 20151010 26 September 2015 (2015-09-26), XP051023925, Retrieved from the Internet: URL:http://www.3gpp.org/ftp/tsg_ran/WG2_RL 2/TSGR2_91bis/Docs/ [retrieved on 2015-09-26]
- ZTE CORPORATION: "Initial considerations on LTE-WLAN Aggregation", 3GPP DRAFT; R3-151523 INITIAL CONSIDERATIONS ON LTE-WLAN AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG3, no. Beijing, P.R. China; 20150824 - 20150828 23 August 2015 (2015-08-23), XP051006688, Retrieved from the Internet: URL:http://www.3gpp.org/ftp/Meetings_3GPP_ SYNC/RAN3/Docs/ [retrieved on 2015-08-23]

## Description

### Related Application

### Technical Field

The present disclosure relates to cellular communications and more specifically to wireless local area network termination (WT) changes.

### Background

Wireless mobile communication technology uses various standards and protocols to transmit data between a base station and a wireless mobile device. Wireless communication system standards and protocols can include the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems, the base station can include a RAN Node such as an Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE).

RANs use a radio access technology (RAT) to communicate between the RAN Node and UE. RANs can include global system for mobile communications (GSM), enhanced data rates for GSM evolution (EDGE) RAN (GERAN), Universal Terrestrial Radio Access Network (UTRAN), and/or E-UTRAN, which provide access to communication services through a core network. Each of the RANs operates according to a specific 3GPP RAT. For example, the GERAN 104 implements GSM and/or EDGE RAT, the UTRAN 106 implements universal mobile telecommunication system (UMTS) RAT or other 3GPP RAT, and the E-UTRAN 108 implements LTE RAT.

A core network can be connected to the UE through the RAN Node. The core network can include a serving gateway (SGW), a packet data network (PDN), gateway (PGW), an access network detection and selection function (ANDSF) server, an enhanced packet data gateway (ePDG) and/or a mobility management entity (MME).
"Details of operations for LTE-WLAN aggregation", 3GPP TSG-RAN WG3 Meeting #89, R3-151375 relates to LWA scenarios and operation for LTE-WLAN aggregation.
"LTE/WLAN aggregation mobility aspects", 3GPP TSG RAN2 #91 Meeting R2-153814, relates to potential LWA mobility scenarios.
"3GPP TSG-RAN WG2 Meeting #93", relates to E-UTRAN radio interface protocol architecture. "3GPP TSG-RAN2 Meeting #91-bis, R2-154666", relates to additional call flows for LWA operation.

### Summary

The invention is defined in accordance with the appended claims. Any examples not falling within the scope of the appended claims are useful for understanding the invention.

### Brief Description of the Drawings

FIG. 1 is a schematic diagram illustrating a system for wireless local area network termination (WT) changes consistent with embodiments disclosed herein.
FIG. 2 is a process diagram illustrating a WT change.
FIG. 3 is a process diagram illustrating an alternate WT change consistent with embodiments disclosed herein.
FIG. 4 is a process diagram illustrating a WT change.
FIG. 5 is a block diagram illustrating a radio access network (RAN) node consistent with embodiments disclosed herein.
FIG. 6 is a block diagram illustrating a user equipment (UE) or mobile station (MS) consistent with embodiments disclosed herein.
FIG. 7 is a block diagram of computing system consistent with embodiments disclosed herein.

### Detailed Description

A detailed description of systems and methods consistent with embodiments of the present disclosure is provided below. While several embodiments are described, it should be understood that the disclosure is not limited to any one embodiment, but instead encompasses numerous alternatives, modifications, and equivalents. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

Techniques, apparatus and methods are disclosed that enable a change of a wireless local area network termination (WT) to avoid service disruption. By not using a source WT release and target WT addition, but using a WT change instead, service interruption visible to the user can be avoided. The WT change can be performed using a (1) break before make method and/or a (2) make before break method. In addition, a WT change can also be performed (3) during handover. For example, in a (1) break before make scenario, an eNB can release a source WT before the UE associates with the target WT. In another example, in a (2) make before break scenario, an eNB can release a source WT after the UE associates with the target WT. In yet another example, in a (3) handover scenario, a UE transitions from a source WT to a target WT while transitioning from a source eNB to a target eNB.

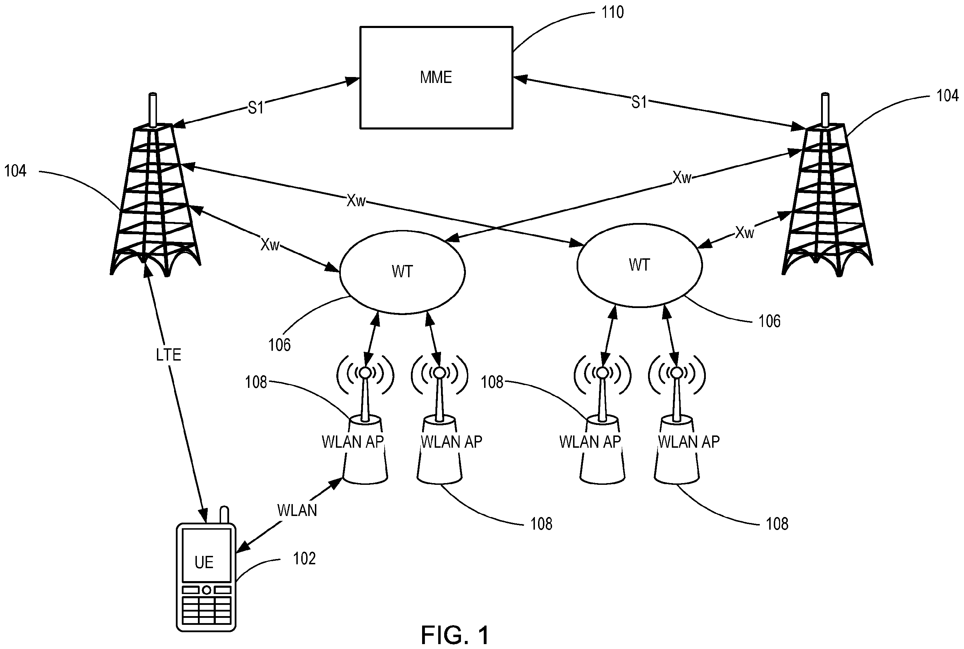

FIG. 1 is a schematic diagram illustrating a system for wireless local area network termination (WT) changes consistent with embodiments disclosed herein. A UE 102 can transmit and receive data over an LTE RAT with an eNB and over a WLAN RAT with a WLAN AP 108. Data sent to or received by the WLAN AP 108 can be administered by a WT 106. The WT 106 communicates with the eNB 104 over an Xw interface to coordinate data transmissions to and from the UE 102. The simultaneous connection of the UE 102 with the eNB 104 and WLAN AP 108 allows the eNB to determine a routing of data to the UE 102. The eNB can use the routing to improve network communication (e.g., reduce saturation of a RAN, etc.) and/or UE communication (e.g., respond to signal quality, etc.). The eNB 104 can also provide access to a core network and/or core network functions for the UE 102 through either the WLAN RAT or the LTE RAT.

The eNB 104 can determine to transition the UE 102 from a source WT 106 to a target WT 106 (which can be based on information, such as signal quality, congestion and/or network characteristics like bandwidth, latency, congestion, etc.). The eNB 104 can generate a wireless local area network termination (WT) addition message for a target WT 106 identifying the UE 102. The WT 106 can send a WT addition request acknowledge message to the eNB 104. The eNB can generate a WT release request for a source WT 106 to release allocated WLAN resources for the UE 102. The eNB 104 can generate a connection reconfiguration request for the UE 102 identifying the target WT 106. The UE 102 can send a connection reconfiguration request complete message to the eNB 104 after associating with the target WT 106. The eNB 104 can receive an association confirmation message from the UE 102 or the target WT 106.

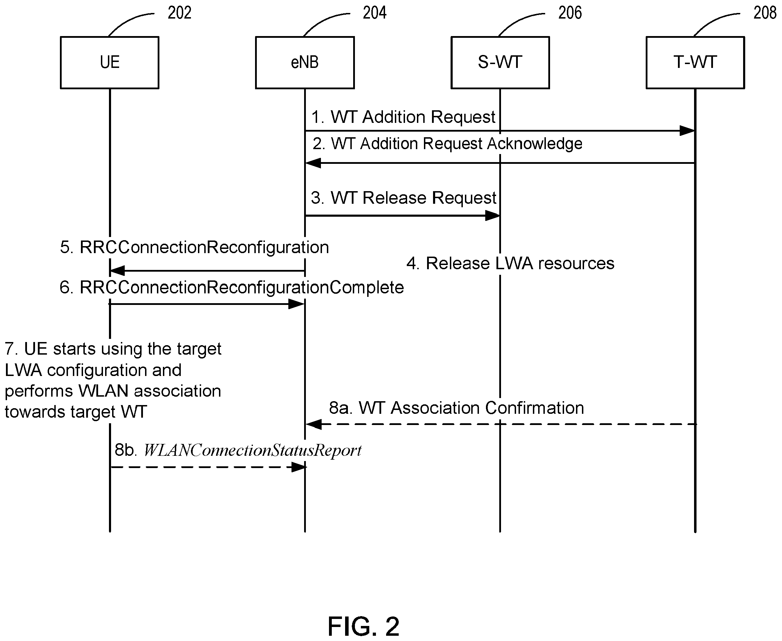

FIGs. 2-4 show processes of changing from a source WT to a target WT. The processes can be accomplished by systems, such as those shown in FIG. 1, including the UE 102, WTs 106 and eNBs 104. It should be recognized that while the process operations are identified by numbers and/or described in an order, the operations can be performed simultaneously and/or out of order unless otherwise indicated.

FIG. 2 is a process diagram illustrating a WT change. The process in FIG. 2 can be known as (1) break before make indicating that an eNB can release a source WT 206 (or disassociate with the source WT 206) before the UE 202 associates with the target WT 208. In some embodiments, a change of WT is initiated by an eNB 204 and used to transfer a UE 202 context from source WT 206 to target WT 208 and to change WT configuration in UE 202 from one WT to another.

In one embodiment, the eNB 202 determines to request a change of WT. The eNB requests the target WT 208 to allocate WLAN resources including source WT E-RAB information, UE identity, new UE WLAN mobility set and WLAN security key *(S-K_{WT}).* The target WT 208 can reject the request. If the target WT 208 is able to admit the full or partial WLAN resource request, the target WT 208 responds with WT Addition Request Acknowledge. If forwarding is needed, the target WT 208 provides forwarding addresses to the eNB 204. The eNB 204 sends the WT Release Request to source WT 206 to release the allocated WLAN resources. The source WT 206 initiates release of allocated WLAN resources. Reception of the WT Release Request message triggers the source WT 206 to stop providing user data to the UE 202 and, if applicable, starts data forwarding of buffered downlink (DL) protocol data units (PDUs) and received uplink (UL) PDUs. Alternatively, source WT 206 can optionally flush the buffer.

The eNB 204 sends a RRCConnectionReconfiguration message to the UE 202 indicating the change of WT configuration from source WT 206 to target WT 208. The UE 202 replies with a RRCConnectionReconfigurationComplete message. The UE 202 applies a new long term evolution wireless local area network aggregation (LWA) configuration and performs WLAN association towards target WT 208.

A confirmation message can be sent from the target WT 208 and/or UE 202. In a first option, the target WT 208 sends the WT association confirmation message to the eNB 204. In a second option, an association confirmation is sent by the UE 202 to the eNB 204 using WLANConnectionStatusReport message. In a third option, both the target WT 208 and the UE 202 can send a confirmation message, with the UE 202 confirmation message being optional.

In some embodiments, operations (5, 6) of the UE connection reconfiguration can occur before operations (3, 4) of the release request and resource release. This prevents the UE 202 from sending more uplink data using LWA and potential loss of data. Alternately, if the eNB 204 controls how UL traffic is routed between WLAN and LTE, the eNB 204 can notify the UE 202 to route traffic over LTE.

In one embodiment, the source WT 206 can send a message to the eNB 204 indicating a poor link condition so that eNB 204 can initiate change of WT if the UE 202 is close to the target WT 208. In case the UE 202 is not close to the target WT 208, the eNB 204 performs a WT release. This option can be supported by adding a Xw-AP "WT Release/Change Required" message from source WT 206 to eNB 204, which can be used before the WT addition request.

In an embodiment, the eNB 204 sends LWA DL data over the LTE network (and avoids the WLAN network) during the WT addition request transition time.. This use of LTE while the UE changes WTs allows the transition of WTs to appear more seamless to the UE andto minimize packet loss.

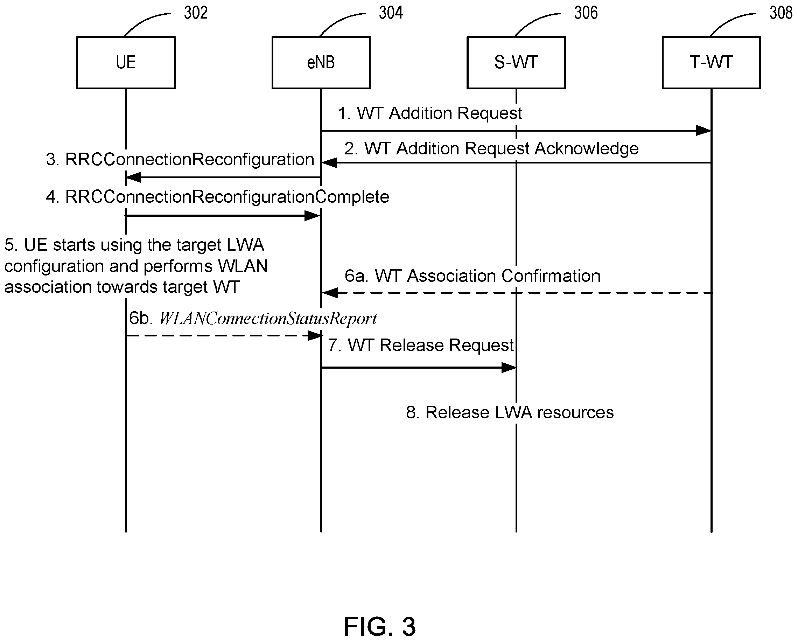

FIG. 3 is a process diagram illustrating an alternate WT change consistent with embodiments disclosed herein. The change of WT can be initiated by eNB 304 and used to transfer a UE context from a source WT 306 to a target WT 308 and to change WT configuration in a UE 302 from the source WT 306 to the target WT 308.

In one embodiment, the eNB 304 determines to request a change of WT. The eNB 304 requests the target WT 308 to allocate WLAN resources including source WT E-UTRAN Radio Access Bearer (E-RAB) information, UE identity, new UE WLAN mobility set and WLAN security key(S-*K_{WT}*). The WT may reject the request. If the target WT 308 is able to admit the full or partial WLAN resource request, the target WT 308 responds with WT Addition Request Acknowledge. If forwarding is needed, the target WT 308 provides forwarding addresses to the eNB 304. The eNB 304 sends the RRCConnectionReconfiguration message to the UE 302 indicating the change of WT configuration from source WT 306 to target WT 308.

Optionally, the UE 302 can suspend the LWA UL. In a case of a split bearer, the UE 302 can use the LTE RAT for UL transmissions. In case of a switch bearer, the UL can be suspended entirely.

In the embodiment, the UE 302 replies with a RRCConnectionReconfigurationComplete message. The UE 302 applies the new LWA configuration and performs WLAN association towards the target WT 308. The eNB 304 can receive a confirmation message. In a first option, the target WT 308 sends the WT association confirmation message to the eNB 304. In a second option, an association confirmation is sent by the UE 302 to the eNB 304 using WLANConnectionStatusReport message. In a third option, both the target WT 308 and the UE 302 can send a confirmation message, with the UE 302 confirmation message being optional.

The eNB 304 sends the WT Release Request to source WT 306 to release the allocated WLAN resources (if a change of WT is successful). The source WT 306 initiates release of allocated WLAN resources. Reception of the WT Release Request message triggers the source WT 306 to stop providing user data to the UE 302 and, if applicable, start data forwarding of buffered DL PDUs and received UL PDUs. Alternatively, the source WT 306 can optionally flush the buffer. This process allows the UE to disassociate with the source WT after the connection reconfiguration request with the target WT.

In a case of an association failure with the target WT 308, the UE 302 can report to the eNB 304. The eNB 304 can decide to release the source WT 306. If the eNB 304 determines not to release source WT 306, a RRC reconfiguration message can be sent to fall back to the source WT 306 configuration. The UE 302 sends a RRC reconfiguration complete message for acknowledgement. This allows the UE to fall back to using the source WT when associating with the target WT fails.

Optionally, the source WT 306 sends the last received PDCP SN on uplink to the UE 302 so the UE can retransmit loss uplink data to the eNB or target WT after the change of WT. Alternatively, the source WT 306 can send this information to eNB 304 and eNB 304 can forward the information to the UE 302.

As above, the source WT 306 can optionally send a message to eNB 304 indicating a poor link condition. Based on this link condition information, the eNB 304 can initiate the change of WT if the UE 302 is close to the target WT 308. In a case when the UE 302 is not close to the target WT 308, the eNB 304 performs a WT release. This transition can be supported by adding a Xw-AP "WT Release/Change Required" message from source WT 306 to eNB 304.

As above, optionally, the eNB 304 can send LWA DL data to using the LTE RAT during this transition time to minimize packet loss.

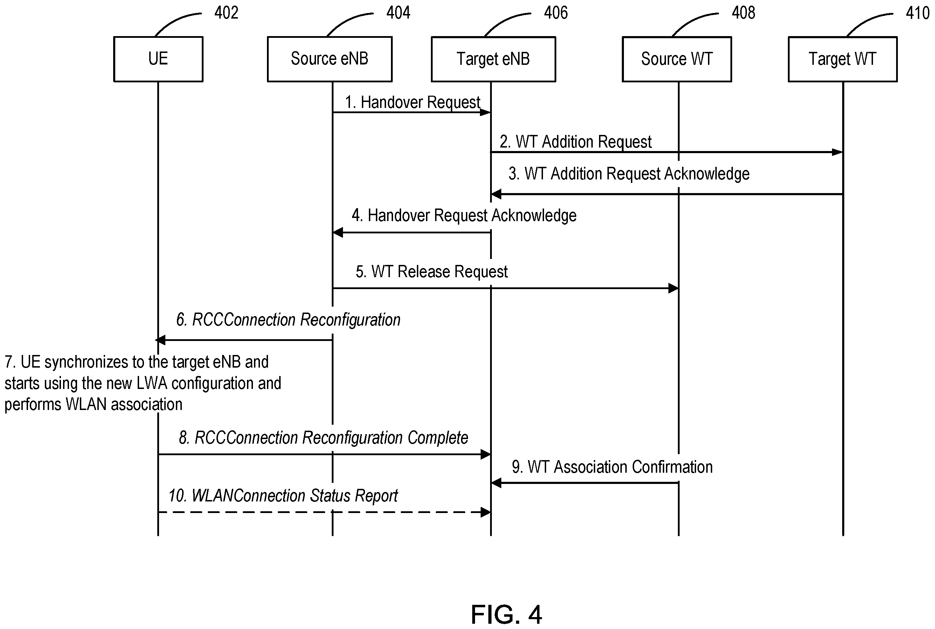

FIG. 4 is a process diagram illustrating a WT change during handover. A source eNB 404 starts the handover procedure by initiating a XU handover procedure that includes transmitting the source WT configuration to target eNB 406, including WT identifier and UE specific information, such as a WLAN mobility set. The target eNB 406 adds target WT 410 using a WT addition procedure, optionally using information received from the source eNB 404. The target WT 410 confirms the addition to the target eNB 406. The target eNB 406 acknowledges the handover request to the source eNB 404. In some embodiments, the message from the target eNB 406 to the source eNB 404 includes in an acknowledge message a transparent container to be sent to the UE 202 as an RRC message to perform the handover which also includes modified mobility set configurations and LWA setup configurations. The source eNB 404 sends a WT release request message to the source WT 408.

The source eNB 404 triggers the UE 402 to apply the new configuration via RRCConnectionReconfiguration message including target eNB 406 and target WT 410 information. UL and DL data can be suspended until links are established again (and the target WT resumes the suspended UL and DL data transmissions). The UE 402 synchronizes to the target eNB 406 (perform random access procedure (RACH)) and starts associating to the target WT 410 and applying the LWA configurations. UE 402 replies to the target eNB 406 that the handover is complete via RRCConnectionReconfigurationComplete message. Source WT 408 informs the target eNB 406 that the UE 202 has associated with target WT 410. UE 202 sends the WLANConnectionStatusReport (if required) to the target eNB 406 to indicate successful association.

In an embodiment, the source WT 404 can be released after sending a radio resource connection (RRC) reconfiguration message, to prevent data loss, and that the UE 402 does not go into link loss procedure.

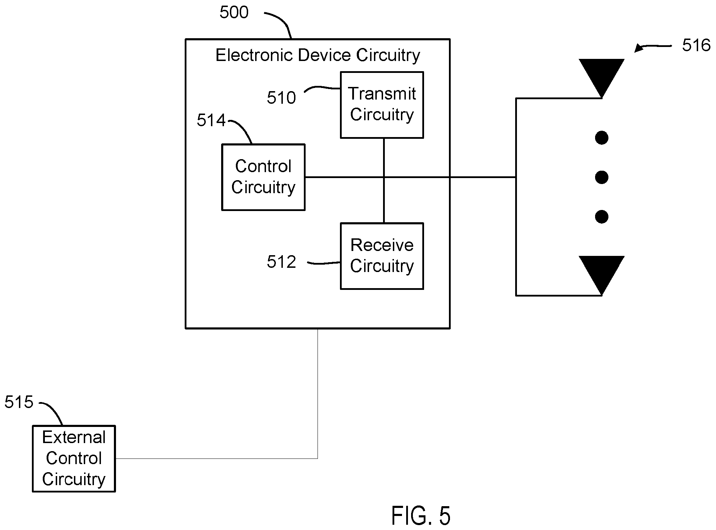

FIG. 5 is a block diagram illustrating electronic device circuitry 500 that may be radio access node (RAN) node circuitry (such as an eNB circuitry), UE circuitry, network node circuitry, or some other type of circuitry in accordance with various embodiments. In embodiments, the electronic device circuitry 500 may be, or may be incorporated into or otherwise a part of, a RAN Node (e.g., an eNB), a UE, a mobile station (MS), a BIS, a network node, or some other type of electronic device. In embodiments, the electronic device circuitry 500 may include radio transmit circuitry 510 and receive circuitry 512 coupled to control circuitry 514 (e.g., baseband processor(s), etc.). In embodiments, the transmit circuitry 510 and/or receive circuitry 512 may be elements or modules of transceiver circuitry, as shown. In some embodiments, some or all of the control circuitry 515 can be in a device separate or external from the transmit circuitry 510 and the receive circuitry 512 (baseband processors shared by multiple antenna devices, as in cloud-RAN (C-RAN) implementations, for example).

The electronic device circuitry 510 may be coupled with one or more plurality of antenna elements 516 of one or more antennas. The electronic device circuitry 500 and/or the components of the electronic device circuitry 500 may be configured to perform operations similar to those described elsewhere in this disclosure.

In embodiments where the electronic device circuitry 500 is or is incorporated into or otherwise part of a UE, the transmit circuitry 510 can transmit messages as shown in FIGs. 2-4. The receive circuitry 512 can receive messages as shown in FIGs. 2-4.

In embodiments where the electronic device circuitry 500 is an eNB, BTS and/or a network node, or is incorporated into or is otherwise part of an eNB, BTS and/or a network node, the transmit circuitry 510 can transmit messages as shown in FIGs. 2-4. The receive circuitry 512 can receive messages as shown in FIGs. 2-4.

In certain embodiments, the electronic device circuitry 500 shown in FIG. 5 is operable to perform one or more methods, such as the processes shown in FIGs. 2-4.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

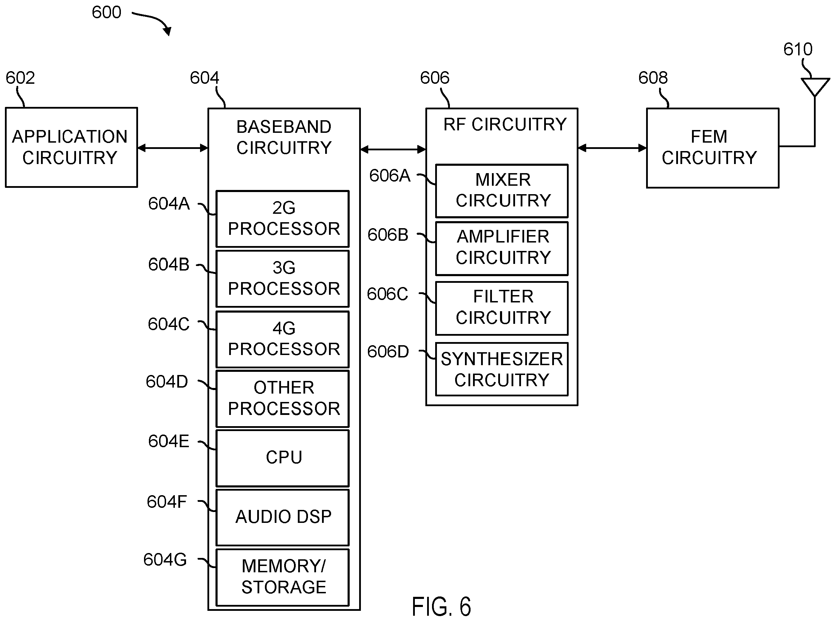

Embodiments described herein may be implemented into a system using any suitably configured hardware and/or software. FIG. 6 is a block diagram illustrating, for one embodiment, example components of a user equipment (UE) or mobile station (MS) device 600. In some embodiments, the UE device 600 may include application circuitry 602, baseband circuitry 604, Radio Frequency (RF) circuitry 606, front-end module (FEM) circuitry 608, and one or more antennas 610, coupled together at least as shown in FIG. 6.

The application circuitry 602 may include one or more application processors. By way of non-limiting example, the application circuitry 602 may include one or more single-core or multi-core processors. The processor(s) may include any combination of general-purpose processors and dedicated processors (e.g., graphics processors, application processors, etc.). The processor(s) may be operably coupled and/or include memory/storage, and may be configured to execute instructions stored in the memory/storage to enable various applications and/or operating systems to run on the system.

By way of non-limiting example, the baseband circuitry 604 may include one or more single-core or multi-core processors. The baseband circuitry 604 may include one or more baseband processors and/or control logic. The baseband circuitry 604 may be configured to process baseband signals received from a receive signal path of the RF circuitry 606. The baseband 604 may also be configured to generate baseband signals for a transmit signal path of the RF circuitry 606. The baseband processing circuitry 604 may interface with the application circuitry 602 for generation and processing of the baseband signals, and for controlling operations of the RF circuitry 606.

By way of non-limiting example, the baseband circuitry 604 may include at least one of a second generation (2G) baseband processor 604A, a third generation (3G) baseband processor 604B, a fourth generation (4G) baseband processor 604C, other baseband processor(s) 604D for other existing generations, and generations in development or to be developed in the future (e.g., fifth generation (5G), 6G, etc.). The baseband circuitry 604 (e.g., at least one of baseband processors 604A-604D) may handle various radio control functions that enable communication with one or more radio networks via the RF circuitry 606. By way of non-limiting example, the radio control functions may include signal modulation/demodulation, encoding/decoding, radio frequency shifting, other functions, and combinations thereof. In some embodiments, modulation/demodulation circuitry of the baseband circuitry 604 may be programmed to perform Fast-Fourier Transform (FFT), precoding, constellation mapping/demapping functions, other functions, and combinations thereof. In some embodiments, encoding/decoding circuitry of the baseband circuitry 604 may be programmed to perform convolutions, tail-biting convolutions, turbo, Viterbi, Low Density Parity Check (LDPC) encoder/decoder functions, other functions, and combinations thereof. Embodiments of modulation/demodulation and encoder/decoder functions are not limited to these examples, and may include other suitable functions.

In some embodiments, the baseband circuitry 604 may include elements of a protocol stack. By way of non-limiting example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 604E of the baseband circuitry 604 may be programmed to run elements of the protocol stack for signaling of the PHY, MAC, RLC, PDCP and/or RRC layers. In some embodiments, the baseband circuitry 604 may include one or more audio digital signal processor(s) (DSP) 604F. The audio DSP(s) 604F may include elements for compression/decompression and echo cancellation. The audio DSP(s) 604F may also include other suitable processing elements.

The baseband circuitry 604 may further include memory/storage 604G. The memory/storage 604G may include data and/or instructions for operations performed by the processors of the baseband circuitry 604 stored thereon. In some embodiments, the memory/storage 604G may include any combination of suitable volatile memory and/or nonvolatile memory. The memory/storage 604G may also include any combination of various levels of memory/storage including, but not limited to, read-only memory (ROM) having embedded software instructions (e.g., firmware), random access memory (e.g., dynamic random access memory (DRAM)), cache, buffers, etc. In some embodiments, the memory/storage 604G may be shared among the various processors or dedicated to particular processors.

Components of the baseband circuitry 604 may be suitably combined in a single chip, a single chipset, or disposed on a same circuit board in some embodiments. In some embodiments, some or all of the constituent components of the baseband circuitry 604 and the application circuitry 602 may be implemented together, such as, for example, on a system on a chip (SOC).

In some embodiments, the baseband circuitry 604 may provide for communication compatible with one or more radio technologies. For example, in some embodiments, the baseband circuitry 604 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 604 is configured to support radio communications of more than one wireless protocol may be referred to as multi-mode baseband circuitry.

The RF circuitry 606 may enable communication with wireless networks using modulated electromagnetic radiation through a non-solid medium. In various embodiments, the RF circuitry 606 may include switches, filters, amplifiers, etc. to facilitate the communication with the wireless network. The RF circuitry 606 may include a receive signal path which may include circuitry to down-convert RF signals received from the FEM circuitry 608, and provide baseband signals to the baseband circuitry 604. The RF circuitry 606 may also include a transmit signal path which may include circuitry to up-convert baseband signals provided by the baseband circuitry 604, and provide RF output signals to the FEM circuitry 608 for transmission.

In some embodiments, the RF circuitry 606 may include a receive signal path and a transmit signal path. The receive signal path of the RF circuitry 606 may include mixer circuitry 606A, amplifier circuitry 606B, and filter circuitry 606C. The transmit signal path of the RF circuitry 606 may include filter circuitry 606C and mixer circuitry 606A. The RF circuitry 606 may further include synthesizer circuitry 606D configured to synthesize a frequency for use by the mixer circuitry 606A of the receive signal path and the transmit signal path. In some embodiments, the mixer circuitry 606A of the receive signal path may be configured to down-convert RF signals received from the FEM circuitry 608 based on the synthesized frequency provided by synthesizer circuitry 606D. The amplifier circuitry 606B may be configured to amplify the down-converted signals.

The filter circuitry 606C may include a low-pass filter (LPF) or band-pass filter (BPF) configured to remove unwanted signals from the down-converted signals to generate output baseband signals. Output baseband signals may be provided to the baseband circuitry 604 for further processing. In some embodiments, the output baseband signals may include zero-frequency baseband signals, although this is not a requirement. In some embodiments, the mixer circuitry 606A of the receive signal path may comprise passive mixers, although the scope of the embodiments is not limited in this respect.

In some embodiments, the mixer circuitry 606A of the transmit signal path may be configured to up-convert input baseband signals based on the synthesized frequency provided by the synthesizer circuitry 606D to generate RF output signals for the FEM circuitry 608. The baseband signals may be provided by the baseband circuitry 604 and may be filtered by filter circuitry 606C. The filter circuitry 606C may include a low-pass filter (LPF), although the scope of the embodiments is not limited in this respect. In some embodiments, the mixer circuitry 606A of the receive signal path and the mixer circuitry 606A of the transmit signal path may include two or more mixers, and may be arranged for quadrature downconversion and/or upconversion, respectively. In some embodiments, the mixer circuitry 606A of the receive signal path and the mixer circuitry 606A of the transmit signal path may include two or more mixers and may be arranged for image rejection (e.g., Hartley image rejection). In some embodiments, the mixer circuitry 606A of the receive signal path and the mixer circuitry 606A may be arranged for direct downconversion and/or direct upconversion, respectively. In some embodiments, the mixer circuitry 606A of the receive signal path and the mixer circuitry 606A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In such embodiments, the RF circuitry 606 may include analog-to-digital converter (ADC) and digital-to-analog converter (DAC) circuitry, and the baseband circuitry 604 may include a digital baseband interface to communicate with the RF circuitry 606.

In some dual-mode embodiments, separate radio IC circuitry may be provided for processing signals for each spectrum, although the scope of the embodiments is not limited in this respect.

In some embodiments, the synthesizer circuitry 606D may include one or more of a fractional-N synthesizer and a fractional N/N+1 synthesizer, although the scope of the embodiments is not limited in this respect as other types of frequency synthesizers may be suitable. For example, synthesizer circuitry 606D may include a delta-sigma synthesizer, a frequency multiplier, a synthesizer comprising a phase-locked loop with a frequency divider, other synthesizers and combinations thereof.

The synthesizer circuitry 606D may be configured to synthesize an output frequency for use by the mixer circuitry 606A of the RF circuitry 606 based on a frequency input and a divider control input. In some embodiments, the synthesizer circuitry 606D may be a fractional N/N+1 synthesizer.

In some embodiments, frequency input may be provided by a voltage controlled oscillator (VCO), although that is not a requirement. Divider control input may be provided by either the baseband circuitry 604 or the applications processor 602 depending on the desired output frequency. In some embodiments, a divider control input (e.g., N) may be determined from a look-up table based on a channel indicated by the applications processor 602.

The synthesizer circuitry 606D of the RF circuitry 606 may include a divider, a delay-locked loop (DLL), a multiplexer and a phase accumulator. In some embodiments, the divider may include a dual modulus divider (DMD), and the phase accumulator may include a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In such embodiments, the delay elements may be configured to break a VCO period up into Nd equal packets of phase, where Nd is the number of delay elements in the delay line. In this way, the DLL may provide negative feedback to help ensure that the total delay through the delay line is one VCO cycle.

In some embodiments, the synthesizer circuitry 606D may be configured to generate a carrier frequency as the output frequency. In some embodiments, the output frequency may be a multiple of the carrier frequency (e.g., twice the carrier frequency, four times the carrier frequency, etc.) and used in conjunction with a quadrature generator and divider circuitry to generate multiple signals at the carrier frequency with multiple different phases with respect to each other. In some embodiments, the output frequency may be a LO frequency (fLO). In some embodiments, the RF circuitry 606 may include an IQ/polar converter.

The FEM circuitry 608 may include a receive signal path which may include circuitry configured to operate on RF signals received from one or more antennas 610, amplify the received signals, and provide the amplified versions of the received signals to the RF circuitry 606 for further processing. The FEM circuitry 608 may also include a transmit signal path which may include circuitry configured to amplify signals for transmission provided by the RF circuitry 606 for transmission by at least one of the one or more antennas 610.

In some embodiments, the FEM circuitry 608 may include a TX/RX switch configured to switch between a transmit mode and a receive mode operation. The FEM circuitry 608 may include a receive signal path and a transmit signal path. The receive signal path of the FEM circuitry 608 may include a low-noise amplifier (LNA) to amplify received RF signals and provide the amplified received RF signals as an output (e.g., to the RF circuitry 606). The transmit signal path of the FEM circuitry 608 may include a power amplifier (PA) configured to amplify input RF signals (e.g., provided by RF circuitry 606), and one or more filters configured to generate RF signals for subsequent transmission (e.g., by one or more of the one or more antennas 610.

In some embodiments, the MS device 600 may include additional elements such as, for example, memory/storage, a display, a camera, one or more sensors, an input/output (I/O) interface, other elements, and combinations thereof.

In some embodiments, the MS device 600 may be configured to perform one or more processes, techniques, and/or methods as described herein, or portions thereof.

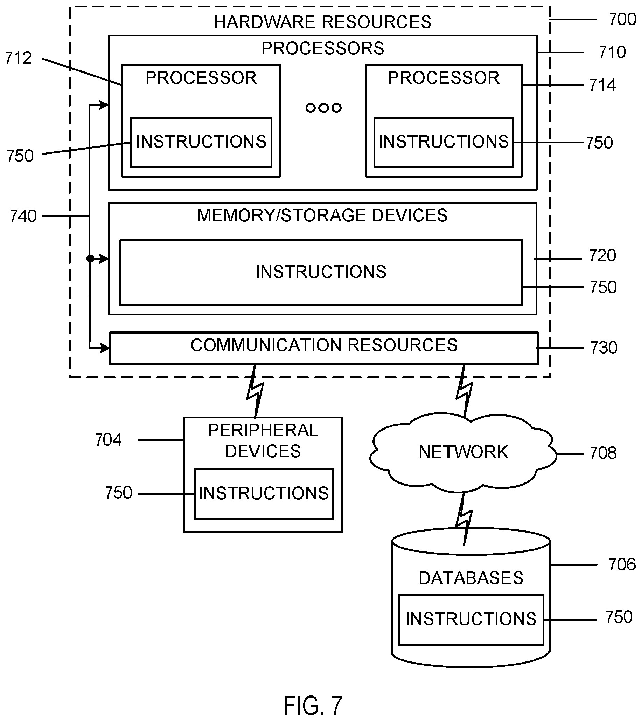

FIG. 7 is a block diagram illustrating components, according to some example embodiments, able to read instructions from a machine-readable or computer-readable medium (e.g., a machine-readable storage medium) and perform any one or more of the methodologies discussed herein. Specifically, FIG. 7 shows a diagrammatic representation of hardware resources 700 including one or more processors (or processor cores) 710, one or more memory/storage devices 720, and one or more communication resources 730, each of which are communicatively coupled via a bus 740.

The processors 710 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 712 and a processor 714. The memory/storage devices 720 may include main memory, disk storage, or any suitable combination thereof.

The communication resources 730 may include interconnection and/or network interface components or other suitable devices to communicate with one or more peripheral devices 704 and/or one or more databases 706 via a network 708. For example, the communication resources 730 may include wired communication components (e.g., for coupling via a Universal Serial Bus (USB)), cellular communication components, Near Field Communication (NFC) components, Bluetooth^{®} components (e.g., Bluetooth^{®} Low Energy), Wi-Fi^{®} components, and other communication components.

Instructions 750 may comprise software, a program, an application, an applet, an app, or other executable code for causing at least any of the processors 710 to perform any one or more of the methodologies discussed herein. The instructions 750 may reside, completely or partially, within at least one of the processors 710 (e.g., within the processor's cache memory), the memory/storage devices 720, or any suitable combination thereof. Furthermore, any portion of the instructions 750 may be transferred to the hardware resources 700 from any combination of the peripheral devices 704 and/or the databases 706. Accordingly, the memory of processors 710, the memory/storage devices 720, the peripheral devices 704, and the databases 706 are examples of computer-readable and machine-readable media.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell^{®}, Microsoft^{®}, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Various techniques, or certain aspects or portions thereof, may take the form of program code (i.e., instructions) embodied in tangible media, such as floppy diskettes, CD-ROMs, hard drives, magnetic or optical cards, solid-state memory devices, a nontransitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. The RAN Node (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

Each computer system includes one or more processors and/or memory; computer systems may also include various input devices and/or output devices. The processor may include a general purpose device, such as an Intel^{®}, AMD^{®}, or other "off-the-shelf' microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described will be illustrated as software modules or components. As used herein, a software module or component may include any type of computer instruction or computer-executable code located within a memory device. A software module may, for instance, include one or more physical or logical blocks of computer instructions, which may be organized as a routine, program, object, component, data structure, etc. that perform one or more tasks or implement particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

Reference throughout this specification to "an example" means that a particular feature, structure, or characteristic described in connection with the example is included in at least one embodiment. Thus, appearances of the phrase "in an example" in various places throughout this specification are not necessarily referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

Furthermore, the described features, structures, or characteristics may be combined in any suitable manner in one or more embodiments. In the following description, numerous specific details are provided, such as examples of materials, frequencies, sizes, lengths, widths, shapes, etc., to provide a thorough understanding of embodiments. One skilled in the relevant art will recognize, however, that the embodiments may be practiced without one or more of the specific details, or with other methods, components, materials, etc. In other instances, well-known structures, materials, or operations are not shown or described in detail to avoid obscuring aspects of the embodiments.

It should be recognized that the systems described herein include descriptions of specific embodiments. These embodiments can be combined into single systems, partially combined into other systems, split into multiple systems or divided or combined in other ways. In addition, it is contemplated that parameters/attributes/aspects/etc. of one embodiment can be used in another embodiment. The parameters/attributes/aspects /etc. are merely described in one or more embodiments for clarity, and it is recognized that the parameters/attributes/aspects /etc. can be combined with or substituted for parameters/attributes/etc. of another embodiment unless specifically disclaimed herein.

Although the foregoing has been described in some detail for purposes of clarity, it will be apparent that certain changes and modifications may be made without departing from the scope of the claims. It should be noted that there are many alternative ways of implementing both the processes and apparatuses described herein. Accordingly, the present embodiments are to be considered illustrative and not restrictive, and the embodiments are not to be limited to the details given herein, but may be modified within the scope of the appended claims.

Those having skill in the art will appreciate that many changes may be made to the details of the above-described embodiments without departing from the scope of the claims. The scope of the present embodiments should, therefore, be determined by the following claims.

## Claims

1. An apparatus of an enhanced node B, eNB (304), comprising:
storage configured to store connection information for a UE, the connection information including wireless local area network termination, WT, information;
a processor configured to:
generate a WT addition message for a target WT (308);
process a WT addition request acknowledge message from the target WT (308);
generate a connection reconfiguration request for a user equipment, UE (302);
process a connection reconfiguration request complete message from the UE (302);
process an association confirmation message, and
generate a WT release request for a source WT (306) to release allocated WLAN resources;
wherein to generate the WT release request further includes generating the WT release request after the connection reconfiguration request.

2. The apparatus of claim 1, wherein the processor is further configured to:
process a message from the source WT (306) indicating poor link quality with the UE (302); and
determine to transition an association of the UE (302) from the source WT (306) to the target WT (308).

3. The apparatus of claim 1, wherein the processor is further configured to:
generate a WT addition message for an alternate target WT (308); and
process a rejection message from the alternate target WT (308).

4. A method for a wireless local area network termination change, the method comprising, by an eNB (304):
generating a WT addition message for a target WT (308);
processing a WT addition request acknowledge message from the target WT (308);
generating a connection reconfiguration request for a user equipment, UE (302);
processing a connection reconfiguration request complete message from the UE (302);
processing an association confirmation message, and
generating a WT release request for a source WT (306) to release allocated WLAN resources;
wherein generating the WT release request further includes generating the WT release request after the connection reconfiguration request.

5. Machine-readable storage including machine-readable instructions, which, when executed by a processor of an enhanced Node B (304), cause the processor to carry out the method as claimed in claim 4.

## Patentansprüche

1. Einrichtung eines enhanced Node B, eNB (304), umfassend:
einen Speicher, ausgelegt zum Speichern von Verbindungsinformationen für ein UE, wobei die Verbindungsinformationen Wireless-Local-Area-Network-Anschluss- bzw. WT-Informationen beinhalten;
einen Prozessor, der zu Folgendem ausgelegt ist:
Erzeugen einer WT-Hinzufügungsnachricht für einen Ziel-WT (308);
Verarbeiten einer WT-Hinzufügungsanforderungsbestätigungsnachricht von dem Ziel-WT (308);
Erzeugen einer Verbindungsrekonfigurationsanforderung für ein Benutzergerät, UE (302);
Verarbeiten einer Verbindungskonfigurationsanforderungsabschlussnachricht von dem UE (302);
Verarbeiten einer Assoziationsbestätigungsnachricht und Erzeugen einer WT-Freigabeanforderung für einen Quellen-WT (306) zum Freigeben zugewiesener WLAN-Ressourcen;
wobei das Erzeugen der WT-Freigabeanforderung ferner Erzeugen der WT-Freigabeanforderung nach der Verbindungsrekonfigurationsanforderung beinhaltet.

2. Einrichtung nach Anspruch 1, wobei der Prozessor ferner zu Folgendem ausgelegt ist:
Verarbeiten einer Nachricht von dem Quellen-WT (306), die eine schlechte Verbindungsqualität mit dem UE (302) angibt; und
Bestimmen, eine Assoziation des UE (302) von dem Quellen-WT (306) zu dem Ziel-WT (308) zu überführen.

3. Einrichtung nach Anspruch 1, wobei der Prozessor ferner zu Folgendem ausgelegt ist:
Erzeugen einer WT-Hinzufügungsnachricht für einen alternativen Ziel-WT (308); und
Verarbeiten einer Ablehnungsnachricht für den alternativen Ziel-WT (308).

4. Verfahren für eine Änderung eines Wireless-Local-Area-Network-Anschlusses, wobei das Verfahren Folgendes durch einen eNB (304) umfasst:
Erzeugen einer WT-Hinzufügungsnachricht für einen Ziel-WT (308);
Verarbeiten einer WT-Hinzufügungsanforderungsbestätigungsnachricht von dem Ziel-WT (308);
Erzeugen einer Verbindungsrekonfigurationsanforderung für ein Benutzergerät, UE (302);
Verarbeiten einer Verbindungskonfigurationsanforderungsabschlussnachricht von dem UE (302);
Verarbeiten einer Assoziationsbestätigungsnachricht und Erzeugen einer WT-Freigabeanforderung für einen Quellen-WT (306) zum Freigeben zugewiesener WLAN-Ressourcen;
wobei das Erzeugen der WT-Freigabeanforderung ferner Erzeugen der WT-Freigabeanforderung nach der Verbindungsrekonfigurationsanforderung beinhaltet.

5. Maschinenlesbares Speichermedium, das maschinenlesbare Anweisungen beinhaltet, die bei Ausführung durch einen Prozessor eines enhanced Node B (304) bewirken, dass der Prozessor das Verfahren nach Anspruch 4 ausführt.

## Revendications

1. Appareil d'un nœud B amélioré, eNB (304), comprenant :
un stockage configuré pour stocker des informations de connexion pour un UE, les informations de connexion incluant des informations de terminaison de réseau local sans fil, WT ;
un processeur configuré pour :
générer un message d'ajout de WT pour un WT cible (308) ;
traiter un message d'accusé réception de demande d'ajout de WT provenant du WT cible (308) ;
générer une demande de reconfiguration de connexion pour un équipement utilisateur, UE (302) ;
traiter un message d'achèvement de demande de reconfiguration de connexion provenant de l'UE (302) ; traiter un message de confirmation d'association ; et
générer une demande de libération de WT pour un WT source (306) pour libérer des ressources WLAN allouées ;
la génération de la demande de libération de WT incluant en outre la génération de la demande de libération de WT après la demande de reconfiguration de connexion.

2. Appareil selon la revendication 1, dans lequel le processeur est en outre configuré pour :
traiter un message provenant du WT source (306) indiquant une faible qualité de liaison avec l'UE (302) ; et
déterminer de faire passer une association de l'UE (302) du WT source (306) au WT cible (308).

3. Appareil selon la revendication 1, dans lequel le processeur est en outre configuré pour :
générer un message d'ajout de WT pour un autre WT cible (308) ; et
traiter un message de rejet provenant de l'autre WT cible (308).

4. Procédé de changement de terminaison de réseau local sans fil, le procédé comprenant, par un eNB (304) :
la génération d'un message d'ajout de WT pour un WT cible (308) ;
le traitement d'un message d'accusé réception de demande d'ajout de WT provenant du WT cible (308) ;
la génération d'une demande de reconfiguration de connexion pour un équipement utilisateur, UE (302) ;
le traitement d'un message d'achèvement de demande de reconfiguration de connexion provenant de l'UE (302) ;
le traitement d'un message de confirmation d'association ; et
la génération d'une demande de libération de WT pour un WT source (306) pour libérer des ressources WLAN allouées ;
la génération de la demande de libération de WT incluant en outre la génération de la demande de libération de WT après la demande de reconfiguration de connexion.

5. Stockage lisible par une machine incluant des instructions lisibles par machine qui, lorsqu'elles sont exécutées par un processeur d'un nœud B amélioré (304), font en sorte que le processeur exécute le procédé selon la revendication 4.
